# EUROPÄISCHE PATENTSCHRIFT

(11) **EP 2 454 304 B1**
(45) Veröffentlichungstag und Bekanntmachung des Hinweises auf die Patenterteilung: **23.10.2013**
(21) Anmeldenummer: 10730724.1
(22) Anmeldetag: 06.07.2010
(51) Int. Cl.: C08G 18/32, C08G 18/38, C08G 18/50, C09D 175/02, C09D 175/04

(54) **FORMAMIDE ENTHALTENDE REAKTIVSYSTEME**
FORMAMIDE-CONTAINING REACTIVE SYSTEMS
SYSTÈMES RÉACTIFS CONTENANT DES FORMAMIDES

(30) Priorität: 17.07.2009 DE 102009033636
(43) Veröffentlichungstag der Anmeldung: 23.05.2012
(73) Patentinhaber: Bayer Intellectual Property GmbH, 40789 Monheim (DE)
(72) Erfinder: PEIFFER, Evelyn, 51375 Leverkusen (DE); BLUM, Harald, 97840 Hafenlohr (DE)
(74) Vertreter: BIP Patents
(86) Internationale Anmeldenummer: PCT/EP2010/004107
(87) Internationale Veröffentlichungsnummer: WO 2011/006607

(56) Entgegenhaltungen:
- EP-A2- 0 469 550
- EP-A2- 0 470 461
- EP-A2- 2 098 547
- GB-A- 1 045 175
- US-A- 3 954 718

## Beschreibung

Reaktive Amine finden u.a. in der Lack-, Klebstoff- und Dichtstoffindustrie vielseitige Verwendung, vor allem als Vernetzer in reaktiven 2-komponentig anwendbaren Produkten, z.B. in Kombination mit Polyisocyanaten. Die daraus resultierenden vernetzten Polyurethan-Polyharnstoffe zeichnen sich durch ein insgesamt sehr gutes Eigenschaftsniveau aus. Auf Grund der hohen Reaktivität der Amine kommt es aber häufig zu sehr schnellen, teilweisen spontanen Reaktionen, die eine sichere, reproduzierbare Applikation erschweren bzw. unmöglich machen.

Aufgrund der hochwertigen Eigenschaften, die mit solchen Bindemittelkombinationen erzielt werden können, besteht daher nach wie vor großer Bedarf an Aminkomponenten mit einer gebremsten Reaktivität gegenüber Polyisocyanaten bzw. isocyanatfunktionellen Prepolymeren, da dies unerlässlich ist, um angemessene Verarbeitungszeiten (Topfzeiten) sicherzustellen.

Bislang sind solche Formamide enthaltende Reaktivsysteme nicht bekannt.

Es sind zwar auf Formamiden und Isocyanaten basierende NCO-terminierte Prepolymere bekannt: Gemäß der EP-A 2 098 547 werden aus oligomeren Formamiden und Isocyanaten NCO-terminierte Prepolymere hergestellt, die sich durch ihre niedrige Viskosität auszeichnen. Derartige Prepolymere sind jedoch nicht Gegenstand der vorliegenden Erfindung.

Gemäß der Lehre der GB-A 1 045 175 und der US-A 3 954 718 wird Dimethylformamid (DMF) als Katalysator oder Lösemittel verwendet, welches jedoch ein tertiäres Amin aufweist, das nicht zur Reaktion mit Isocyanaten fähig ist. Somit können nach dieser Lehre nicht die erfindungsgemäßen reaktiven Bindemittelsysteme erhalten werden.

Gemäß der EP-A 0 469 550 werden Formamide als reaktive Komponente für Epoxy-Systeme eingesetzt, jedoch nicht für Polyurethane. Die hiermit vorgelegten neuen Patentansprüche stellen klar, dass es sich um reaktive Systeme handelt, die zu Polyurethanen reagieren.

Aus der EP-A 0 470 461 sind 2K-Autoreparaturlacke bekannt, die lange Verarbeitungszeiten aufweisen. Es werden jedoch Aspartate zur Härtung mit Isocyanaten eingesetzt, und die damit erreichte Änderung der Reaktionszeit ist nicht ausreichend. Durch Verwendung der Formamidstrukturen gemäß der vorliegenden Erfindung kann eine weitere Verlangsamung der Reaktion/Aushärtung erreicht werden.

Gemäß EP-A 0 469 550 werden Epoxide mit Formamidstrukturen umgesetzt. Dies ist eine völlig andere Chemie, Rückschlüsse auf die Polyurethanchemie sind nicht möglich bzw. führen auch zu nicht ungefährlichen Resultaten: Epoxide werden mit aliphatische Aminen gehärtet, was bei Isocyanaten zur Lösung der erfindungsgemäßen Aufgabenstellung wegen der viel zu hohen Reaktivität dieser Amine nicht möglich ist.

Es wurde überraschend gefunden, dass Formamid-terminierte Verbindungen auf Basis von Di- bzw. Polyaminen im Vergleich zu Aminen eine gebremste Reaktivität gegenüber Polyisocyanaten bzw. isocyanatfunktionellen Prepolymeren haben und z.B. zu Beschichtungen, Lacken, Klebstoffen, Dichtmassen, Form- und Schaumkörpern verarbeitet werden können.

Gegenstand der Erfindung sind daher neue Reaktivsysteme mit - in Vergleich zu Aminen -verlängerter Verarbeitungszeit, die Formamide enthalten, also reaktive Bindemittelsysteme enthaltend mindestens ein Formamid, dadurch gekennzeichnet, dass sie aus
A) mindestens einer Formamidstrukturen enthaltenden Komponente auf Basis von Di- und/oder Triaminen ausgewählt aus der Gruppe bestehend aus Ethylendiamin, 1,2-Propylendiamin, 1,3-Propylendiamin, 1,4-Butandiamin, Neopentandiamin, 1,5-Diamino-2-methylpentan, 2-Butyl-2-ethyl-1,5-pentandiamin, 1,6-Hexamethylendiamin, 2,5-Diamino-2,5-dimethylhexan, 2,2,4- und/oder 2,4,4-Trimethyl-1,6-diaminohexan, 1,8-Diaminooctan, 1,11-Diaminoundecan, 1,12-Diaminododecan, 4-Aminomethyl-1,8-octandiamin (Triaminononan), Diethylentriamin, Triethylentetramin, cycloaliphatische Amine, 2,4- und/oder 2,6-Hexahydrotoluylendiamin, Isopropyl-2,4-diamino-cyclohexan und/oder Isopropyl-2,6-diaminocyclohexan, Tricyclodecan-bis(methylamin), 1,3-Bis-(aminomethyl)-cyclohexan, 2,4'- und/oder 4,4'-Diaminodicyclohexylmethan, 3,3'-Dimethyl-4,4'-diamino-dicyclohexylme-than sowie dessen Isomeren, eine Methylgruppe als Kemsubstituenten aufweisenden Diaminodicyclohexylmethane, 3(4)-Aminomethyl-1-methyl-cyclohexylamin, araliphatische Di- oder Triamine, 1,3-Bis-(aminomethyl)-benzol, 3,5-Diethyltoluol-2,4-diamin, m-Xylylendiamin. 4,6-Dimethyl-1,3-benzoldimethanamin, 4,4'- und/oder 2,4'- und/oder 2,2'-Methylenbisbenzolamin, Heteroatome enthaltende Amine, Dimerfettsäurediamin, Bis-(3-aminopropyl)-methylamin, 4,9-Dioxadodecan-1,12-diamin, 4,7,10-Tri-oxatridecan-1,13-diamin, alkoxysilangruppenhaltige Diamine, durch Reaktion bifunktioneller, primärer Amine mit ungesättigte Gruppen erhaltene Michaeladdukte,
   ausgewählt ist,
B) mindestens einer Komponente mit Polyisocyanatgruppen und
C) gegebenenfalls weiteren, gegebenenfalls isocyanatreaktive Gruppen enthaltenden Komponenten
bestehen.

Geeignete Polyisocyanatkomponenten B) können Polyisocyanate sein, die mindestens zwei freie Isocyanatgruppen pro Molekül aufweisen. Geeignet sind z.B. Di- bzw. Polyisocyanate

X-(NCO)ₙ,

wobei n = 2 bis 10, vorzugsweise 2 bis 5, und X für einen aliphatischen Kohlenwasserstoffrest mit 4 bis 36 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht.

Beispiele derartiger Di- oder höherfunktionelle Polyisocyanate sind 1,4-, 1,3-, und/oder 1,2-Cyclohexandiisocyanat, 1-Methyl-2,4-diisocyanato-cyclohexan, 1-Methyl-2,6-diiso-cyanato-cyclohexan, Tetramethylendiisocyanat, Octamethylendiisocyanat, Decamethylendiisocyanat, Dodecamethylendiisocyanat, H₆ - 2,4- und/oder 2,6- Diisocyanatotoluol, 4,4'-Diisocyanatodiphenylmethan, 2,4'-Diisocyanatodiphenylmethan, 2,2'- Diisocyanatodiphenylmethan, meta- und/oder para-Xylylendiisocyanat, 2,4-Diisocyanatotoluol und/oder 2,6-Diisocyanatotoluol, Isopropenyldimethyltoluylendiisocyanat, α,α,α,α,'α,'-Tetra-methyl-m-und/oder p-Xylylendiisocyanat, 1,6-Hexamethylendiisocyanat, Trimethylhexandiisocyanat, Tetramethylhexandiisocyanat, Nonantriisocyanat, 1-Isocyanato-3,3,5-trimethyl-5-isocyanatomethylcyclohexan (Isophorondiisocyanat), 4,4'-Diisocyanato-dicyclohexylmethan und/oder 2,4'-Diisocyanato-dicyclohexylmethan und/oder 2,2'-Diisocyanato-dicyclohexyl-methan sowie deren Mono- und Dimethylsubstituierten Derivate.

Ebenfalls geeignet sind Umsetzungsprodukte, Homologe, Oligomere und/oder Polymere der genannten Polyisocyanate mit Urethan-, Biuret-, Carbodiimid-, Isocyanurat-, Allophanat-, Iminooxadiazindion- und/oder Uretdionstruktureinheiten, sowie Mischungen der beispielhaft genannten, ggf. auch mit anderen Isocyanaten.

Die durchschnittliche Funktionalität der Polyisocyanatkomponente B) beträgt mindestens 1,5, vorzugsweise mindestens 2,0 , besonders bevorzugt mindestens 2,4.

Bevorzugt besteht die Polyisocyanatkomponente B) aus flüssigen oligomeren Polyisocyanaten auf Basis von Hexamethylendiisocyanat, Isophorondiisocyanat, H₆ - 2,4- und/oder 2,6- Diisocyanatotoluol, 4,4'-Diisocyanatodiphenylmethan, 2,4'-Diisocyanatodiphenyl-methan, 2,2'- Diisocyanatodiphenylmethan, meta- und/oder para-Xylylendiisocyanat, 2,4-Diisocyanatotoluol und/oder 2,6-Diisocyanatotoluol mit Urethan-, Harnstoff-, Isocyanurat-, Biuret-, Uretdion-, Carbodiimid-, Allophanat- und/oder Iminooxadiazindion-Struktureinheiten oder/und urethan- und/oder allophanatgruppenhaltigen Umsetzungsprodukten bzw. Prepolymeren der bevorzugt genannten Diisocyanate mit hydroxyfunktionellen Verbindungen wie z.B. Trimethylolpropan, Butandiol, Ethylenglykol, Diethylenglykol, Propylenglykol, Neopentylglykol, C2-, C3 und/oder C4-Polyether, Polyester, Polycarbonate, Rizinusöl.

Besonders bevorzugt besteht die Polyisocyanatkomponente B) aus Hexamethylendiisocyanat, Isophorondiisocyanat, 2,4-Diisocyanatotoluol und/oder 2,6-Diisocyanatotoluol, 4,4'-Diisocyanatodiphenylmethan, 2,4'-Diisocyanatodiphenylmethan, 2,2'- Diisocyanatodiphenylmethan oder Isomerengemischen.

Komponenten C) können sein: Hydroxy-, amino- und/oder Thiol-funktionelle Verbindungen wie z.B. Polyester, C2-Polyether, C3-Polyether, C4-Polyether, Polycarbonate, Polyether Carbonate, Polymerisate, Polykondensate, Rizinusöl, Polycaprolactone, Alkydharze, Polyamine, Polyamide, Polyimide, Polyvinylacetate, Polyvinylalkohole, Polyacrylate, Polymethacrylate, Polyolefine, Copolymerisate, Michaeladdukte, Polyepoxide und/oder niedermolekulare Alkohole, Amine und/oder Thiole, wie z.B Ethylenglykol, Dietgylenglykol, 1,2- oder 1,3-Propylenglykol, 1,4- oder 1,3-Butylenglykol, 1,6-Hexandiol, 1,8-Octandiol, Neopentylglykol, 1,4-Hydroxymethylcyclohexan, 2-Methyl-1,3-propandiol, Glycerin, Trimethylolpropan, 1,2,6-Hexantriol, 1,2,4-Butantriol, Trimethylolethan, Pentaerythrit, Mannitol, Sorbitol, Methylglykoside, Zucker, Phenol, Isononylphenol, Resorcin, Hydrochinon, 1,2,2- oder 1,1,2-Tris-(hydroxyphenyl)-ethan, Ethylendiamin, Tetra- oder Hexamethylenamin, Triethanolamin, Anilin, Phenylendiamin, 2,4- und 2,6-Diaminotoluol und Polyphenylpolymethylenpolyamin, Isophorondiamin, Diethyltoluoldiamin (DETDA), 3,3'-Di-chloro-4,4'-diamino-diphenylmethan (MBOCA), 3,5-Diamino-4-chloro-isobutylbenzoat, 4-Methyl-2,6-bis(methylthio)-1,3-diaminobenzol (Ethacure 300), Trimethylenglykol-di-p-aminobenzoat (Polacure 740M) und 4,4'-Diamino-2,2'-dichloro-5,5'-diethyldiphenylmethan (MCDEA), wobei die Mitverwendung freier Amine auf untergeordnete Mengen beschränkt ist.

Oxazolanfunktionelle Verbindungen, oxazolidinfunktionelle Verbindungen, Asparginsäureester, Ketimine, Aldimine, Hexahydropyrimidine und/ oder Tetrahydroimidazole sind ebenfalls als Komponenten C) geeignet. Es ist auch möglich, Mischungen der genannten Verbindungen C) und auch Verbindungen C) mit unterschiedlichen funktionellen Gruppen zu verwenden.

Gegenstand der Erfindung sind auch Bindemittelkombinationen, auf Basis von bei Raumtemperatur in kristalliner bzw. fester Form vorliegenden, erfindungsgemäßen Formamiden und deren Verwendung z.B. in oder als Pulverlacke oder Schmelzklebstoffe.

Die Herstellung der Formamide kann auf unterschiedlichste Art und Weise erfolgen:
Die Umsetzung der Di- und/oder Polyamine kann in einem Überschuss an Ameisensäurealkylester bei der Siedetemperatur des Ameisensäureesters erfolgen, wobei nach erfolgter Reaktion der Amino- zur Formamidgruppe der Überschuss Ameisensäurealkylester und der ebenfalls entstehende Akohol, abdestilliert wird.

Möglich ist weiterhin die Umsetzung der Mono-, Di- oder Triamine zu den formamidterminierten niedermolekularen Verbindungen mit Ameisensäure oder anderen Ameisensäurederivaten, wie Kohlenmonoxid, gemischten Ameisensäure-Carbonsäureanhydriden, niedermolekularen Amiden oder Aktivestern der Ameisensäure oder vorläufigen Reaktionsprodukten der Ameisensäure mit Amidkupplungsreagentien, wie Carbodiimiden oder kondensierten Phosphosäurederivaten.

Ebenfalls möglich, ist die Umsetzung von Formamid, beziehungsweise dem mit einer starken Base generierten Anion des Formamids mit Alkylierungsreagentien der Formel (I)

X-[A]ₙ (I)

wobei X für einen aliphatischen, cycloaliphatischen oder aromatischen Rest, n für eine natürliche Zahl von 2 bis 5 und A für eine Abgangsgruppe, wie Chlorid, Bromid, Iodid, Mesylat, Tosylat oder Triflat steht.

Die Umsetzung zum Formamid erfolgt bevorzugt in einem Überschuss an Ameisensäure-C1-C4-alkylester, wobei ein Mol Diamin mit einem Überschuss von 2 bis 6 Mol Ameisensäure-C1-C4-alkylester, besonders bevorzugt 2,5 bis 4 Mol, vorzugsweise Methylformiat oder Ethylformiat, bei der Siedetemperatur des Ameisensäureesters, wobei nach erfolgter Reaktion der Amino- zur Formamidgruppe der Überschuss Ameisensäurealkylester und der ebenfalls entstehende Alkohol, vorzugsweise Methanol oder Ethanol, abdestilliert wird.

Durch Mischung unterschiedlicher Aminkomponenten bzw. Mischung von deren Lösungen ist es möglich, auf diese Art eine Mischung von Formamidkomponenten zu erhalten.

Die erfindungsgemäßen Reaktivsysteme können bei Umgebungstemperatur bis 250 °C ausgehärtet werden.

Katalysatoren, die zugesetzt werden können, um die Reaktivität zu beeinflussen, sind metallorganische Verbindungen wie Zinn(II)salze oder Titan(IV)salze von Carbonsäuren, starke Basen wie Alkali-Hydroxide, -Alkoholate und -Phenolate, z.B. Di-n-octyl-Zinnmercaptid, Dibutylzinnmaleat, -diacetat, -dilaurat, -dichlorid, -bisdodecylmarcaptid, Zinn-II-acetat, -ethylhexoat und -diethylhexoat, Tetraisopropyltitanat oder Blei-Phenyl-Ethyl-Dithiocarbaminat. Eine weitere Verbindungsklasse stellen die Dialkyl-Zinn (IV)carboxylate dar. Es können auch Dicarbonsäuren eingesetzt werden. Als Säuren seien beispielhaft genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie 2-Ethylhexan-, Capryl-, Caprin-, Laurin-, Myristin-, Palmitin- und Stearinsäure. Konkrete Verbindungen sind Dibutyl- und Dioctyl-zinndiacetat, -maleat, -bis-(2-ethylhexoat), -dilaurat, Tributylzinnacetat, Bis(β-methoxycarbonylethyl)zinndilaurat und Bis(β-acetyl-ethyl)-zinndilaurat.

Auch Zinnoxide und -sulfide sowie -thiolate sind brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis (β-methoxycarbonyl-ethyl) zinndidodecylthiolat, Bis (β-acetyl-ethyl) zinn-bis (2-ethyl-hexylthiolat), Dibutyl-und Dioctylzinndidodecylthiolat, Butyl- und Octylzinntris (thioglykolsäure-2-ethylhexoat), Dibutyl-und Dioctylzinn-bis(thioglykolsäure-2- ethylhexoat), Tributyl- und Trioctylzinn (thioglykolsäure-2-ethylhexoat) sowie Butyl- und Octylzinntris(thioethylenglykol-2-ethylhexoat), Dibutyl- und Dioctylzinn- bis (thioethylenglykol-2-ethylhexoat), Tributyl- und Trioctylzinn (thioethylenglykol-2-ethylhexoat), Bis-(β-methoxycarbonyl-ethyl)zinn- bis-(thioethylengly-kol-2-ethylhexoat), bis-(β-methoxycarbonyl-ethyl)-zinn-bis-(thioglykolsäure-2-ethylhex-oat), und bis-(β-acetyl-ethyl)zinn-bis-(thioethy-englykol-2-ethylhexoat) und Bis- (β-acetyl-ethyl)zinn-bis(thioglykolsäure-2-ethyl-hexoat.

Bismut-organische Verbindungen, beispielsweise Triarylbismut-Verbindungen, Oxide dieser Verbindungen und Alkyl-oder Arylhalogenbismutine der Typen R2 BiX und R3 BiX2 sowie Phenolate und Carboxylate des Bismuts können ebenfalls eingesetzt werden. Als Bismut-organische Verbindungen werden insbesondere Bismut-Carboxylate eingesetzt, wobei die Carbonsäuren 2 bis 20 C-Atome, bevorzugt 4 bis 14-Atome besitzen. Als Säuren seien ausdrücklich genannt : Buttersäure, Capronsäure, Caprylsäure, Caprinsäure, Laurinsäure, Myristinsäure, Palmitinsäure, Stearinsäure, Arachinsäure, Isobuttersäure sowie 2-Ethylhexansäure. Es können auch Mischungen von Bismutcarboxylaten mit anderen Metallcarboxylaten, beispielsweise Zinncarboxylaten eingesetzt werden.

Insbesondere werden die folgenden tertiären Amine als Katalysator, allein oder in Kombination mit mindestens einem der oben genannten Katalysatoren, eingesetzt Diazabicyclooctan (Dabco), Triethylamin, Dimethylbenzylamin (Desmorapid DB, Bayer), Bisdimethylaminoethylether (Calalyst Al, UCC), Teramethylguanidin, Bisdimethylaminomethyl-phenol, 2, 2'-Dimorpholinodiethylether, 2-(2-Dimethylaminoethoxy)ethanol, 2-Dimethylaminoethyl-3-dimethylaminopropylether, Bis-(2-dimethylaminoethyl)ether, N,N-Dimethylpiperazin, N-(2-hydroxyethyl)-2-azanorborane, Tacat^{®} DP-914 (Texaco Chemical), Jeffcat^{®}, N, N, N, N- Tetrarnethylbutan-1, 3-diamin, N, N, N, N-Tetramethylpropan-1, 3-diamin, N, N, N, N- Tetramethylhexan-1, 6-diamin sowie beispielsweise Triethanolamin oder Triisopropanolamin.

Die Katalysatoren könen auch in oligomerisierter oder polymerisierter Form vorliegen, z. B. als N-methyliertes Polyethylenimin.

Geeignet sind auch 1-Methylimidazol, 2-Methyl-1-vinyldimidazol, 1-Allylimidazol, 1-Phenylimidazol, 1,2, 4, 5-Tetramethylimidazol, 1 (3-Aminopropyl) imidazol, Pyrimidazol, 4-Dimethylamino-pyridin, 4-Pyrrolidinopyridin, 4-Morpholino-pyridin, 4 Methylpyridin und N-Dodecyl-2-Methyl-imidazol.

Zur Erzielung besonderer Effekte ist es auch möglich, geringe Mengen an in der Lack- und Klebstoffindustrie üblichen Hilfsmitteln bei der Herstellung der erfindungsgemäßen Reaktivsysteme zuzusetzen, wie z.B. oberflächenaktive Substanzen, Emulgatoren, Stabilisatoren, Antiabsetzmittel, UV-Stabilisatoren, Katalysatoren für die Vernetzungsreaktion, Entschäumer, Antioxidantien, Hautverhinderungsmittel, Verlaufshilfsmittel, Verdicker, und/- oder Bakterizide.

Die erfindungsgemäßen Reaktivsysteme können eingesetzt werden in oder als Lack, Beschichtung, Schlichte, Tinte, Druckfarbe, Klebstoff, Dichtstoff, Schmelzklebstoff, Montageschaum, Kaschierklebstoff, Vergussmasse, Weich-, Hart- oder Integralschaum zur Beschichtung, Verklebung, Abdichtung von ggf. bereits vorbeschichteten mineralischen bzw. keramisch Untergründen und Materialien, Beton, Asphalt, Bitumen, Hartfaserwerkstoffen, metallischen Untergründen, Kunststoffen, Papier, Druckpapier, Pappe, Verbundwerkstoffe, Glas, Porzellan, Textil, Leder, hölzerne und holzartige Substrate wie z.B. Möbel, Holzfaserplatten, Parkett, Fensterrahmen, Türen, Zäune, Panelen, Bretter, Balken, Dächer, z.B. als Einschichtlack, in Mehrschichtlacken, als Grundierung, als Zwischenschicht, als Füller, als Basislack, als Decklack, als Barriereschicht, als Primer, als Haftvermittler, als Schutzschicht, als Abziehlack, als temporäre Beschichtung, als Schlichte, in Funktionsschichten, als Overcoat, als Klarlack, als pigmentierter Lack, zur Herstellung von Formteilen, darüber hinaus auch in Klebstoffen, Dichtmassen, Druckfarben, Tinten, Schäumen, Folien und Fasern.

Die Herstellung der Beschichtung kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die erfindungsgemäß herzustellenden und zu verwendenden Lacke und Beschichtungsmassen können jedoch auch nach anderen Methoden, beispielsweise durch Streichen, Rollen oder Rakeln appliziert werden.

### Beispiele:

Verwendete Ausgangsstoffe:
1,6-Hexamethylendiamin, eine difunktionelle, aminoterminierte, aliphatische Verbindung, 2-Methyl-1,5-diaminopentan, eine difunktionelle, aminoterminierte, verzweigte, aliphatische Verbindung,
Jeffamin^{®} ED 600 (Huntsman, UK) ein difunktionelles Polyetheramin,
4,7,10-Trioxatridecan-1,13-diamin, eine difunktionelle, aminoterminierte Verbindung,
4-Aminomethyl-1,8-octandiamin, eine trifunktionelle, aminoterminierte, aliphatische Verbindung,
Essigsäureethylester,
Benzoylchlorid,
Irganox^{®} 1076 (Ciba, CH), ein sterisch gehindertes Phenol,
Desmodur^{®} N 3300 (Bayer MaterialScience AG, Deutschland), ein aliphatisches Polyisocyanat mit einem NCO-Gehalt von 21,8 %,
Desmodur^{®} N 100, ein aliphatisches Polyisocyanat mit einem NCO-Gehalt von 22,0 %,
Desmodur^{®} E 23, ein aromatisches Prepolymer mit einem NCO-Gehalt von 15,4 %,
Desmodur^{®} E 14, ein aromatisches Prepolymer mit einem NCO-Gehalt von 3,3 %,
Desmodur^{®} E 14, ein aliphatisch-aromatisches Prepolymer mit einem NCO-Gehalt von 10,5 %.

Topfzeit: Zeitspanne zwischen Herstellung der Mischung und deutlichem Viskositätsanstieg bzw. Vernetzung (Topfzeit).

Lösemittelbeständigkeit: Eine mit Lösemittel getränkte Tamponage wird 1 Minute auf die zu untersuchende Oberfläche aufgesetzt. Nach Entfernung wird die Oberfläche visuell geprüft und beurteilt.

### Beispiel 1

Man tropft bei maximal 50°C zu 116 g 1,6-Hexamethylendiamin gelöst in 170 g Ethanol innerhalb von 4h 222g Ameisensäureethylester und lässt 4h nachrühren. Dann werden der überschüssige Ameisensäureethylester und das gebildete und eingesetzte Ethanol abdestilliert.

Man erhält eine formamidterminierte niedermolekulare Verbindung mit einem Schmelzpunkt von 105-108 °C und Reaktivitäten wie in Tabelle 1 dargestellt.

### Beispiel 2

Man tropft bei maximal 50°C zu 116 g 2-Methyl-1,5-diaminopentan innerhalb von 4 Stunden 222 g Ameisensäureethylester und lässt 4 Stunden nachrühren. Dann werden der überschüssige Ameisensäureethylester und das gebildete Ethanol abdestilliert.

Man erhält eine formamidterminierte niedermolekulare Verbindung mit einer Viskosität von 581 mPas und Reaktivitäten wie in Tabelle 1 dargestellt.

### Beispiel 3

Man tropft bei maximal 50°C zu 600 g Jeffamin^{®} ED 600 innerhalb von 2 Stunden 222 g Ameisensäureethylester und lässt 4 Stunden unter Rückfluss nachrühren. Dann werden der überschüssige Ameisensäureethylester und das gebildete Ethanol abdestilliert.

Man erhält eine formamidterminierte Oligomere Verbindung mit einer Viskosität von 223 mPas und Reaktivitäten wie in Tabelle 1 dargestellt.

### Beispiel 4

Man tropft bei maximal 50°C zu 793 g 4,7,10-Trioxatridecan-1,13-diamin innerhalb von 3 Stunden 800 g Ameisensäureethylester und lässt 4 Stunden unter Rückfluss nachrühren. Dann werden der überschüssige Ameisensäureethylester und das gebildete und eingesetzte Ethanol abdestilliert.

Man erhält eine formamidterminierte niedermolekulare Verbindung mit einer Viskosität von 239 mPas und Reaktivitäten wie in Tabelle 1 dargestellt.

### Beispiel 5

Man tropft bei maximal 50°C zu 346 g 4-Aminomethyl-1,8-octandiamin innerhalb von 3 Stunden 667 g Ameisensäureethylester und lässt 4 Stunden unter Rückfluss nachrühren. Dann werden der überschüssige Ameisensäureethylester und das gebildete und eingesetzte Ethanol abdestilliert.

Man erhält eine formamidterminierte niedermolekulare Verbindung mit einer Viskosität von 10200 mPas und Reaktivitäten wie in Tabelle 1 dargestellt.

### Vergleichssubstanzen

1. Hexandiamin
2. 2-Methyl-1,5-diaminopentan
3. Asparaginsäureester auf Basis von 2 Mol Dimethylmaleat und 1 Mol 2-Methyl-1,5-diaminopentan

In der **Tabelle 1** (nachfolgende Seite) werden Topfzeiten und einige lacktechnische Eigenschaften der erfindungsgemäßen Reaktivsysteme auf Basis von Formamiden im Vergleich zu solchen auf Basis von herkömmlichen Aminen dargestellt. Die erfindungsgemäßen, Formamide enthaltenden Reakktivsysteme weisen durchweg deutlich längere Verarbeitungszeiten / Topfzeiten als die vergleichbaren Amine auf. Es werden praxistaugliche Verarbeitungszeiten erreicht.

| **Polyisocyanat-Vernetzer** | **Bsp. 1** | **Bsp. 2** | **Bsp. 3** | **Bsp. 4** | **Bsp. 5** | **Vergleich 1** | **Vergleich 2** | **Vergleich 3** |
|---|---|---|---|---|---|---|---|---|
| **Desmodur® N 3300** | | -**Topfzeit** > **5 h** | - **Topfzeit > 5 h** | - **Topfzeit 80 min** | - **Topfzeit > 7 h** | - Topfzeit < 2 s | - Topfzeit < 2 s | - Topfzeit 15 min |
| | | - klarer Film | | | | | | |
| | | - glatte Oberfläche | | | | | | |
| | | - gute Ethanolfestigkeit | | | | | | |
| | | - gute Xylolbeständigkeit | | | | | | |
| **Desmodur® N100** | - **Topfzeit 2 min** | - **Topfzeit > 5 h** | **- Topfzeit > 5 h** | **- Topfzeit 90 min** | **- Topfzeit > 7 h** | - Topfzeit < 2 s | - Topfzeit < 2 s | - Topfzeit 15 min |
| | - klarer Film | | | | | | | |
| | - glatte Oberfläche | | | | | | | |
| **Desmodur® E 23** | **- Topfzeit 2 min** | **Topfzeit 2 h** | **-Topfzeit 2 h** | - **Topfzeit** 3 **h** | - **Topfzeit 3 h** | - Topfzeit < 2 s | - Topfzeit < 2 s | |
| | | | - klarer Film | | | | | |
| | | | - gummiartige Oberfläche | | | | | |
| | | | - Pendelhärte 17 s | | | | | |
| **Desmodur® HL** | | - **Topfzeit 50 min** | - **Topfzeit 75 min** | - **Topfzeit 75 min** | - **Topfzeit 7 h** | - Topfzeit < 2 s | - Topfzeit < 2 s | |
| | | - klarer Film | - klarer Film | - klarer Film | - klarer Film | | | |
| | | - glatte Oberiläche | - glatte Oberfläche | - glatte Oberfläche | - glatte Oberfläche | | | |
| | | - Pendelhärte 90 s | - Pendelhärte 30 s | - Pendelhärte 97 s | - Pendelhärte 66 s | | | |
| | | - gute Ethanolfes-tigkeit | - gute Ethanolfestigkeit | - gute Ethanolfestigkeit | - gute Ethanolfes-tigkeit | | | |
| | | - gute Xylolbeständigkeit | - gute Xylolbeständigkeit | - gute Xylolbeständigkeit | - gute Xylolbeständigkeit | | | |
| **Desmodur® E14** | **- Topfzeit 2 min** | **Topfzeit 5 h** | - **Topfzeit > 5 h** | **- Topfzeit > 5 h** | - **Topfzeit > 7 h** | - Topfzeit < 2 s | - Topfzeit < 2 s | |
| | | - klarer Film | | | | | | |
| | | - gummiartige Oberfläche | | | | | | |
| | | - Pendelhärte 49 s | | | | | | |

## Patentansprüche

1. Reaktive Bindemittelsysteme enthaltend mindestens ein Formamid, **dadurch gekennzeichnet, dass** sie aus
A) mindestens einer Formamidstrukturen enthaltenden Komponente auf Basis von Di- und/oder Triaminen ausgewählt aus der Gruppe bestehend aus
Ethylendiamin, 1,2-Propylendiamin, 1,3-Propylendiamin, 1,4-Butandiamin, Neopentandiamin, 1,5-Diamino-2-methylpentan, 2-Butyl-2-ethyl-1,5-pentandiamin, 1,6-Hexamethylendiamin, 2,5-Diamino-2,5-di-methylhexan, 2,2,4- und/oder 2,4,4-Trimethyl-1,6-diaminohexan, 1,8-Diaminooctan, 1,11-Diaminoundecan, 1,12-Diaminododecan, 4-Amino-methyl-1,8-octandiamin (Triaminononan), Diethylentriamin, Triethylentetramin, cycloaliphatische Amine, 2,4- und/oder 2,6-Hexahydrotoluylendiamin, Isopropyl-2,4-diaminocyclohexan und/oder Isopropyl2,6-diaminocyclohexan, Tricyclodecanbis(methylamin), 1,3-Bis-(aminomethyl)-cyclohexan, 2,4'- und/oder 4,4'-Diaminodicyclohexylmethan, 3,3'-Dimethyl-4,4'-diamino-dicyclohexylmethan sowie dessen Isomeren, eine Methylgruppe als Kernsubstituenten aufweisenden Diaminodicyclohexylmethane, 3(4)-Aminomethyl-1-methylcyclohexyl-amin, araliphatische Di- oder Triamine, 1,3-Bis-(aminomethyl)-benzol, 3,5-Diethyltoluol-2,4-diamin, m-Xylylendiamin. 4,6-Dimethyl-1,3-benzoldimethanamin, 4,4'- und/oder 2,4'- und/oder 2,2'-Methylenbis-benzolamin, Heteroatome enthaltende Amine, Dimerfettsäurediamin, Bis-(3-aminopropyl)-methylamin, 4,9-Dioxadodecan-1,12-diamin, 4,7,10-Trioxatridecan-1,13-diamin, alkoxysilangruppenhaltige Diamine, durch Reaktion bifunktioneller, primärer Amine mit ungesättigte Gruppen erhaltene Michaeladdukte,
ausgewählt ist,
B) mindestens einer Komponente mit Polyisocyanatgruppen und
C) gegebenenfalls weiteren, gegebenenfalls isocyanatreaktive Gruppen enthaltenden Komponenten
bestehen.

2. Verwendung der reaktiven Bindemittelsysteme gemäß Anspruch 1 in Lacken, als Lack oder als Beschichtung.

3. Verwendung der reaktiven Bindemittelsysteme gemäß Anspruch 1 in oder als Kleb- oder Dichtstoff:

4. Verwendung der reaktiven Bindemittelsysteme gemäß Anspruch 1 in oder als Tinte oder Druckfarbe.

5. Verwendung der reaktiven Bindemittelsysteme gemäß Anspruch 1 zur Herstellung von flächigen oder geschäumten Formkörpern.

6. Verwendung der reaktiven Bindemittelsysteme gemäß Anspruch 1 in oder als Schlichte.

7. Verwendung der reaktiven Bindemittelsysteme gemäß Anspruch 1 zur Beschichtung, zur Verklebung und/oder zur Abdichtung von Metall, Holz, Holzwerkstoffen, Leder, Textilien, Kunststoffen, mineralischen Materialien, Kork, Fasern, Beton, Papier, Pappe und Folien.

## Claims

1. Reactive binder systems comprising at least one formamide, **characterized in that** they consist of
A) at least one component comprising formamide structures and based on di- and/or triamines selected from the group consisting of ethylenediamine, 1,2-propylenediamine, 1,3-propylenediamine, 1,4-butanediamine, neopentanediamine, 1,5-diamino-2-methylpentane, 2-butyl-2-ethyl-1,5-pentanediamine, 1,6-hexamethylenediamine, 2,5-diamino-2,5-dimethyl-hexane, 2,2,4- and/or 2,4,4-trimethyl-1,6-diaminohexane, 1,8-diaminooctane, 1,11-diamino-undecane, 1,12-diaminododecane, 4-aminomethyl-1,8-octanediamine (triaminononane), diethylenetriamine, triethylenetetramine, cycloaliphatic amines, 2,4- and/or 2,6-hexahydrotolylene-diamine, isopropyl-2,4-diaminocyclohexane and/or isopropyl-2,6-diaminocyclohexane, tri-cyclodecanebis(methylamine), 1,3-bis(amino-methyl)cyclohexane, 2,4'- and/or 4,4'-diamino-dicyclohexylmethane, 3,3'-dimethyl-4,4'-diaminodicyclohexylmethane and also its isomers, diaminodicyclohexylmethanes having a methyl group as a ring substituent, 3(4)-amino-methyl-1-methylcyclohexylamine, araliphatic di-or triamines, 1,3-bis(aminomethyl)benzene, 3,5-diethyltoluene-2,4-diamine, m-xylylenediamine, 4,6-dimethyl-1,3-benzenedimethanamine, 4,4'- and/or 2,4'- and/or 2,2'-methylenebis-benzeneamine, hetero-atom-containing amines, dimer fatty acid diamine, bis(3-aminopropyl)-methylamine, 4,9-dioxadodecane-1,12-diamine, 4,7,10-trioxatridecane-1,13-diamine, alkoxysilane-group-containing diamines, Michael adducts obtained by the reaction of bifunctional primary amines with unsaturated groups,
B) at least one component having polyisocyanate groups, and
C) optionally further components optionally comprising isocyanate-reactive groups.

2. Use of the reactive binder systems according to Claim 1 in paints, as a paint or as a coating.

3. Use of the reactive binder systems according to Claim 1 in or as an adhesive or sealant composition.

4. Use of the reactive binder systems according to Claim 1 in or as liquid ink or printing ink.

5. Use of the reactive binder systems according to Claim 1 in the manufacture of sheetlike or foamed articles.

6. Use of the reactive binder systems according to Claim 1 in or as a sizing composition.

7. Use of the reactive binder systems according to Claim 1 for coating, bonding and/or sealing of metal, wood, woodbase, leather, textiles, plastics, mineral materials, cork, fibres, concrete, paper, card and foil/film/sheet.

## Revendications

1. Systèmes réactifs de liants, contenant au moins un formamide, **caractérisés en ce qu'**ils sont constitués par
A) au moins un composant contenant des structures de type formamide à base de diamines et/ou de triamines choisies dans le groupe constitué par l'éthylènediamine, la 1,2-propylènediamine, la 1,3-propylènediamine, la 1,4-butanediamine, la néopentanediamine, le 1,5-diamino-2-méthylpentane, la 2-butyl-2-éthyl-1,5-pentanediamine, la 1,6-hexaméthylènediamine, le 2,5-diamino-2,5-diméthylhexane, le 2,2,4-triméthyl-1,6-diaminohexane et/ou le 2,4,4-triméthyl-1,6-diaminohexane, le 1,8-diaminooctane, le 1,11-diamino-undécane, le 1,12-diaminododécane, la 4-aminométhyl-1,8-octanediamine (triaminononane), la diéthylènetriamine, la triéthylènetétraamine, les amines cycloaliphatiques, la 2,4-hexahydrotoluylènediamine et/ou la 2,6-hexahydrotoluylènediamine, l'isopropyl-2,4-diaminocyclohexane et/ou l'isopropyl-2,6-diaminocyclohexane, la tricyclodécane-bis(méthylamine), le 1,3-bis-(aminométhyl)-cyclohexane, le 2,4'-diaminodicyclohexylméthane et/ou le 4,4'-diaminodicyclohexylméthane, le 3,3'-diméthyl-4,4'-diaminodicyclohexylméthane ainsi que leurs isomères, les diaminodicyclohexylméthanes présentant un groupe méthyle comme substituant de noyau, la 3-(4)-aminométhyl-1-méthylcyclohexylamine, les diamines ou triamines araliphatiques, le 1,3-bis-(aminométhyl)-benzène, la 3,5-diéthyltoluène-2,4-diamine, la m-xylylènediamine, la 4,6-diméthyl-1,3-benzènediméthanamine, la 4,4'-méthylènebisbenzèneamine et/ou la 2,4'-méthylènebisbenzèneamine et/ou la 2,2'-méthylènebisbenzèneamine, les amines contenant des hétéroatomes, une diamine d'acide gras dimère, la bis-(3-aminopropyl)-méthylamine, la 4,9-dioxadodécane-1,12-diamine, la 4,7,10-trioxatridécane-1,13-diamine, les diamines contenant des groupes alcoxysilane, les produits d'addition de Michael obtenus par réaction d'amines primaires, difonctionnelles présentant des groupes insaturés,
B) au moins un composant présentant des groupes polyisocyanate et
C) le cas échéant d'autres composants, contenant le cas échéant des groupes réactifs par rapport aux isocyanates.

2. Utilisation des systèmes réactifs de liants selon la revendication 1 dans des laques, comme laque ou comme revêtement.

3. Utilisation des systèmes réactifs de liants selon la revendication 1 dans ou comme adhésif ou masse d'étanchéité.

4. Utilisation des systèmes réactifs de liants selon la revendication 1 dans ou comme encre ou encre d'imprimerie.

5. Utilisation des systèmes réactifs de liants selon la revendication 1 pour la préparation de corps façonnés plats ou moussés.

6. Utilisation des systèmes réactifs de liants selon la revendication 1 dans ou comme colle.

7. Utilisation des systèmes réactifs de liant selon la revendication 1 pour le revêtement, le collage et/ou le bouchage de métal, de bois, de matériaux à base de bois, de cuir, de textiles, de matériaux synthétiques, de matériaux minéraux, de liège, de fibres, de béton, de papier, de carton-pâte et de feuilles.
